# EUROPÄISCHE PATENTSCHRIFT

(11) **EP 2 365 927 B1**
(45) Veröffentlichungstag und Bekanntmachung des Hinweises auf die Patenterteilung: **24.04.2013**
(21) Anmeldenummer: 09744599.3
(22) Anmeldetag: 26.09.2009
(51) Int. Cl.: B62K 19/34, B62M 3/00, B62M 6/50, G01L 3/10

(54) **TRETLAGER**
BOTTOM BRACKET BEARING
PEDALIER

(30) Priorität: 02.10.2008 DE 102008050236
(43) Veröffentlichungstag der Anmeldung: 21.09.2011
(73) Patentinhaber: Schaeffler Technologies AG & Co. KG, 91074 Herzogenaurach (DE)
(72) Erfinder: BENKERT, Frank, 97534 Waigolshausen (DE); GLÜCK, Stefan, 97424 Schweinfurt (DE); ROSENHEINRICH, Bert, 91088 Bubenreuth (DE)
(86) Internationale Anmeldenummer: PCT/DE2009/001358
(87) Internationale Veröffentlichungsnummer: WO 2010/037368

(56) Entgegenhaltungen:
- DE-A1- 19 609 981
- DE-A1- 19 613 079
- JP-A- 2000 335 476

## Beschreibung

Die Erfindung betrifft ein Tretlager nach Anspruch 1 sowie ein mit einer Tretkurbel antreibbares Fahrzeug nach Anspruch 10.

Aus der Praxis ist bekannt, die in ein Tretlager mittels der beiden Tretkurbeln jeweils eingebrachten Drehmoment für jede der beiden Tretkurbeln separat zu erfassen. Es ist ferner bekannt, zur Erfassung eines an einer Welle angreifenden Drehmomentes einen magnetisierten Abschnitt an dem Korpus der Welle auszubilden, so dass, bei Anliegen oder Änderung eines Drehmomentes, der magnetisierte Abschnitt aufgrund des magnetostriktiven Effektes seine Magnetisierung ändert, was mittels eines magnetischen Sensors, beispielsweise mittels einer Spule, eines Hall- oder Reed-Sensors, erfasst und ausgewertet werden kann.

Im Hinblick auf die Durchführung der Messung von Drehmomenten bei einer Welle mittels des magnetostriktiven Effektes erweist sich die lagerichtige Positionierung des Sensors relativ zu dem magnetisierten Abschnitt der Welle als schwierig. Diese Schwierigkeit verschärft sich noch, wenn für ein Tretlager mit einer Welle und zwei mit der Welle verbundenen Tretkurbeln für jede der beiden Tretkurbeln das jeweils in die Welle eingeleitete Drehmoment separat gemessen werden soll.

DE 10 2007 062 156.8, angemeldet am 21. Dezember 2007, beschreibt ein Tretlager mit einer als Hohlwelle ausgebildeten Welle, an der eine erste Tretkurbel und eine zweite Tretkurbel befestigt sind, wobei die Welle entweder als einzelne, beide Tretkurbeln aufnehmende Hohlwelle oder als zwei aneinander drehfest gefügte Teilhohlwellen ausgebildet ist. In beiden Fällen ist der Kettenblattträger unmittelbar an die Hohlwelle bzw. eine der beiden Teilhohlwellen drehfest gefügt. Eine derartige Anordnung erweist sich als nachteilig, da der Kettenblattträger vor dem Einbau der Hohlwelle anzubringen ist. Ist die Welle durch zwei aneinander gefügte Teilhohlwelle gebildet, erhöht sich der Montageaufwand, da die beiden Teilhohlwellen zusätzlich noch aneinander zu befestigen sind.

Die DE-A-19 613 079 offenbart ein Tretlager mit den Merkmalen des Oberbegriffs des Anspruchs 1.

### Aufgabe der Erfindung

Es ist die Aufgabe der Erfindung, ein einfach zu montierendes Tretlager mit einem Kettenblattträger anzugeben.

### Zusammenfassung der Erfindung

Diese Aufgabe wird erfindungsgemäß mit einem Tretlager nach Anspruch 1 gelöst.

Bei der Montage wird der Kettenblattträger erst mit einer Kettenblattwelle verbunden bzw. ist einteilig mit einer Kettenblattwelle ausgebildet, wobei in einem späteren Montageschritt die Kettenblattwelle auf die Welle des Tretlagers, die als Voll- oder Hohlwelle ausgebildet sein kann, befestigt wird. Vorzugsweise ist vorgesehen, dass die Verbindung der Kettenblattwelle mit der Welle als Schraubverbindung zwischen einem an der Kettenblattwelle angebrachten Gewinde und einem an der Welle angebrachten Gegengewinde ausgebildet ist, wozu die Welle bzw. die Kettenblattwelle jeweils mit einem Außen- bzw. Innengewinde versehen sind, so dass sich die Montage des Kettenblattträgers vereinfacht.

Vorzugsweise ist vorgesehen, dass die Kettenblattwelle mindestens abschnittsweise als Hohlwelle ausgebildet ist, und dass die Kettenblattwelle abschnittsweise die Welle umgibt. Im Ergebnis resultiert eine leichte und lagerichtige Montage der Kettenblattwelle an der Welle. Die Welle kann dabei die Kettenblattwelle vollständig durchsetzen, so dass die Welle, als Voll- oder Hohlwelle ausgebildet, ermöglicht, beide Tretkurbeln direkt an der Welle drehfest anzubinden.

Erfindungsgemäß ist vorgesehen, dass die Kettenblattwelle abschnittsweise eine erste Magnetisierung aufweist, und dass ein erster Sensor vorgesehen ist, der eine Änderung der ersten Magnetisierung bei einem im Bereich der ersten Magnetisierung vorliegenden Drehmoment erfasst. Aufgrund der drehfesten Verbindung der Kettenblattwelle mit der Welle kann das in das Tretlager eingeleitete Drehmoment nicht nur an der Welle, sondern auch an der Kettenblattwelle erfasst werden. Das erweist sich insbesondere dann von Vorteil, wenn die erste Magnetisierung der Kettenblattwelle so angeordnet ist, dass diese etwa mittig zwischen den beiden Tretkurbeln angeordnet ist und damit in einem Bereich der Welle bzw. der Kettenblattwelle, an dem das angreifende Drehmoment der Summe der beiden über die einzelnen Tretkurbeln eingeleiteten Drehmomente entspricht.

Vorzugsweise ist vorgesehen, dass die Welle eine zweite Magnetisierung aufweist, und dass ein zweiter Sensor vorgesehen ist, der eine Änderung der zweiten Magnetisierung bei einem im Bereich der zweiten Magnetisierung vorliegenden Drehmoment erfasst. Die zweite Magnetisierung kann dabei in einem Bereich angeordnet sein, bei dem das Drehmoment dem von einer der beiden Tretkurbeln in die Welle eingeleiteten Drehmoment entspricht. Zusammen mit dem insgesamt in die Welle eingeleiteten Drehmoment, das beispielsweise an der mit der Welle drehfest verbundenen Kettenblattwelle ermittelt werden kann, lässt sich für jede der beiden Tretkurbeln das jeweils eingeleitete Drehmoment entweder direkt erfassen oder aus dem Gesamtdrehmoment durch Differenzbildung berechnen.

Vorzugsweise ist hinsichtlich der Anordnung der ersten und zweiten Sensoren vorgesehen, dass der erste Sensor und der zweite Sensor in einer Baueinheit aufgenommen sind, die die Welle und die Kettenträgerwelle abschnittsweise umgibt. Die starre Baueinheit ermöglicht dabei eine schnelle und einfache sowie reproduzierbare Positionierung beider Sensoren relativ zu den beiden Magnetisierungen an der Welle bzw. an der Kettenwelle.

Vorzugsweise ist vorgesehen, dass ein Mittel zum Erfassen der Drehzahl der Welle vorgesehen ist, wobei das Mittel zum Erfassen der Drehzahl der Welle beispielsweise in der vorgenannten, die beiden Sensoren aufnehmenden Baueinheit angeordnet sein kann. Mit der Kenntnis der Drehzahl sowie der beiden in die Welle eingeleiteten Drehmomente beider Tretkurbeln lässt sich die an jeweiligen Tretkurbeln erbrachte Leistung des Bedieners der Tretkurbeln berechnen, beispielsweise in einer nachgeschalteten Auswerteeinheit.

Weitere Vorteile und Merkmale der Erfindung ergeben sich aus den abhängigen Ansprüchen sowie aus der nachfolgenden Beschreibung eines Ausführungsbeispiels.

Die Erfindung wird im folgenden unter Bezugnahme auf die anliegende Zeichnung näher beschrieben und erläutert.

### Kurze Beschreibung der Zeichnungen

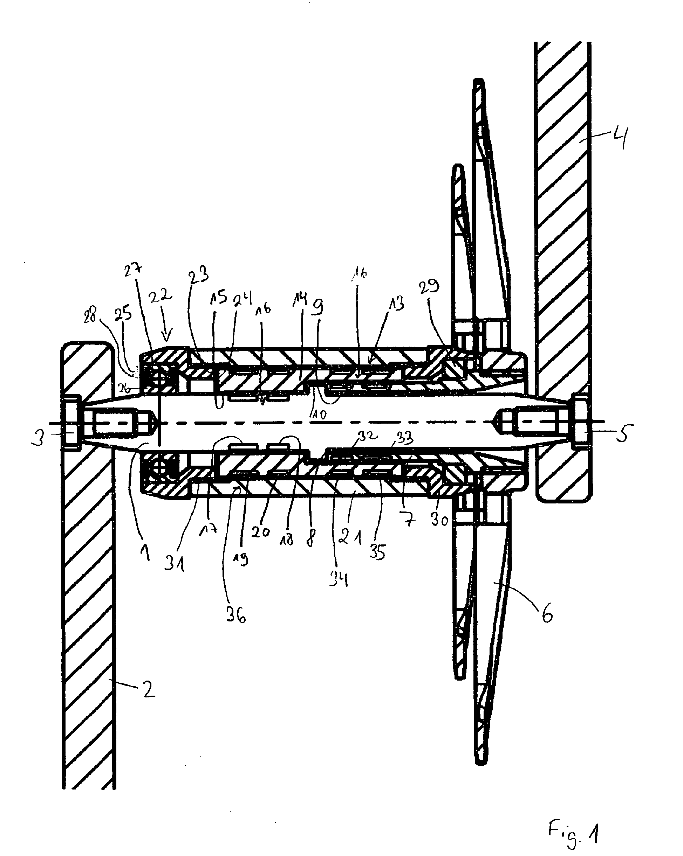

- Fig. 1: zeigt einen schematischen Schnitt durch ein Ausführungsbeispiel eines erfindungsgemäßen Tretlagers eines Ausführungsbeispiels eines erfindungsgemäßen Fahrzeugs.

### Detaillierte Beschreibung der Zeichnung

Fig. 1 zeigt ein Tretlager, das Teil des Antriebs eines Fahrrades ist. Das Tretlager umfasst eine als Vollwelle ausgebildete Welle 1, eine erste Tretkurbel 2, die mittels einer ersten Schraubverbindung 3 drehfest mit der Welle 1 verbunden ist, sowie eine zweite Tretkurbel 4, die mittels einer zweiten Schraubverbindung 5 ebenfalls drehfest mit der Welle 1 verbunden ist.

Das Tretlager umfasst weiter einen Kettenblattträger 6, der drehfest, beispielsweise mittels eines Presssitzes, an einer Kettenblattwelle 7 angeordnet ist. Die Kettenblattwelle 7 ist als Hohlwelle ausgebildet, innerhalb derer die Welle 1 abschnittsweise angeordnet ist.

Die Kettenblattwelle 7 ist mit der Welle 1 drehfest verbunden. Die Kettenblattwelle 7 weist an einem Endabschnitt 8 ein Innengewinde auf, das mit einem Außengewinde an einem Mittenabschnitt 9 der Welle 1 zusammengreift, so dass die Verbindung der Kettenblattwelle 7 mit der Welle 1 als Schraubverbindung zwischen dem Innengewinde und dem Außengewinde ausgebildet ist.

Angrenzend an den Mittenabschnitt 9 der Welle 1 sowie den Endabschnitt 8 der Kettenblattwelle 7 ist eine Verbreiterung 10 der Welle 1 vorgesehen, die als Endanschlag für die Kettenblattwelle 7 vorgesehen ist, und an der der Endabschnitt 8 der Kettenblattwelle 7 anliegt. Die drehfeste Verbindung zwischen der Welle 1 und der Kettenblattwelle 7 durch die im wesentlichen mittig zwischen den beiden Tretkurbeln 2, 4 angeordnete Schraubverbindung stellt sicher, dass das in die Kettenblattwelle 7 eingeleitete Drehmoment der (vorzeichenbehafteten) Summe der beiden in die Tretkurbeln 2, 4 eingeleiteten Drehmomente, also das Netto-Drehmoment, beträgt. An der Kettenblattwelle 7 lässt sich damit das in die Welle 1 eingeleitete Netto-Drehmoment abgreifen und ablesen.

An der äußeren Mantelfläche 11 der Kettenblattwelle 7 ist abschnittsweise eine erste Magnetisierung 12 vorgesehen, die sich aufgrund des magnetostriktiven Effektes in Betrag und / oder Richtung ändert, sobald im Bereich der ersten Magnetisierung 12 ein Drehmoment anliegt, das mechanische Spannungen im Bereich der ersten Magnetisierung in dem Korpus der Kettenblattwelle 7 hervorruft. Das Magnetfeld der ersten Magnetisierung 12 bzw. die Änderung des Magnetfeldes der ersten Magnetisierung 12 wird von einem ersten Sensor 13 erfasst, der baulich getrennt von der Kettenblattwelle 7 und der Welle 1 in einer Baueinheit 14 angeordnet ist. Die erste Magnetisierung 12 umfasst einen ersten magnetisierten Abschnitt 32 und einen axial beabstandeten zweiten magnetisierten Abschnitt 33, wobei die beiden magnetisierten Abschnitte 32, 33 zueinander gegenläufig magnetisiert sind, so dass das jeweilige Magnetfeld die Kettenblattwelle 7 im Uhrzeigersinn bzw. im Gegenuhrzeigersinn umläuft. Jedem der beiden magnetisierten Abschnitte 32, 33 ist jeweils ein magnetischer Teilsensor 34, 35 zugeordnet, wobei der jeweilige Teilsensor 34, 35 das Magnetfeld des magnetisierten Abschnitts 32, 33 erfasst. Die beiden Teilsensoren 34, 35 sind zu dem ersten Sensor 13 zusammengeschaltet, der das resultierende Netto-Magnetfeld der beiden magnetisierten Abschnitte 32, 33 der ersten Magnetisierung 12 erfasst. Die jeweilige Magnetisierung des ersten magnetisierten Abschnitts 32 und des zweiten magnetisierten Abschnitts 33 ist in Betrag und Richtung so gewählt, dass für den Fall, dass kein Drehmoment in der Kettenblattwelle 7 vorliegt, ein verschwindendes Netto-Magnetfeld in dem Sensor 13 erfasst wird. Wird ein Drehmoment in der Kettenblattwelle 7 erzeugt, wird die Magnetisierung des einen der beiden magnetisierten Abschnitte 32, 33 gegenüber der Magnetisierung des anderen der beiden magnetisierten Abschnitte 32, 33 verstärkt, so dass ein nicht-verschwindendes Netto-Magnetfeld in dem Sensor 13 erfasst wird, das nach Betrag und Richtung dem Drehmoment in der Kettenblattwelle 7 entspricht.

An einer äußeren Mantelfläche 15 des Korpus der Welle 1 ist eine zweite Magnetisierung 16 vorgesehen. Die zweite Magnetisierung 16 umfasst einen ersten magnetisierten Abschnitt 17 und einen von diesem axial beabstandeten zweiten magnetisierten Abschnitt 18, wobei die beiden magnetisierten Abschnitte 17, 18 zueinander gegenläufig magnetisiert sind, so dass das jeweilige Magnetfeld die Welle 1 im Uhrzeigersinn bzw. entgegen dem Uhrzeigersinn umläuft. Den beiden magnetisierten Abschnitten 17, 18 ist jeweils ein magnetischer Teilsensor 19, 20 zugeordnet. Die beiden Teilsensoren 19, 20 sind zu einem gemeinsamen, zweiten Sensor 36 zusammengeschaltet, der das Netto-Magnetfeld der einzelnen magnetisierten Abschnitte 17, 18 der zweiten Magnetisierung 16 erfasst. Die räumliche Trennung der zweiten Magnetisierung 16 in die beiden axial beabstandeten magnetisierten Abschnitte 17, 18 ermöglicht die Unterdrückung von Störsignalen, insbesondere solchen, die nicht auf mechanische Spannung in dem Korpus der Welle 1 aufgrund von über die erste Tretkurbel 2 eingeleiteten Drehmomenten beruhen.

Die Teilsensoren 19, 20 eines zweiten Sensors 36 bzw. der erste Sensor 13 mit den Teilsensoren 34, 35 sind beispielsweise jeweils als Hall-Sensor ausgebildet. Die Teilsensoren 19, 20 des zweiten Sensors 36 sowie der erste Sensor 13 mit den Teilsensoren 34, 35 sind in der Baueinheit 14 befestigt und aufgenommen, wobei die Baueinheit 14 die Welle 1 sowie die Kettenträgerwelle 7 abschnittsweise umgibt. Die Baueinheit 14 ist aus einem amagnetischen Material, insbesondere als Spritzgussteil aus einem Kunststoff, hergestellt. Ebenfalls in der Baueinheit 14 aufgenommen ist ein Mittel zum Erfassen der Drehzahl der Welle 1 bzw. der Kettenblattwelle 7, das bildlich nicht dargestellt ist, und beispielsweise auf einer optischen Erfassung und Auswertung einer Struktur auf der Mantelfläche des Korpus der Welle 1 bzw. der Kettenblattwelle 7 beruhen kann.

Zur lagerichtigen Positionierung des ersten Sensors 13 sowie der Teilsensoren 19, 20 des zweiten Sensors in der Baueinheit 14 bezüglich der Welle 1 und der Kettenträgerwelle 7 sowie einem Gehäuse 21 des Fahrrades ist ein erstes Zwischenelement 22 vorgesehen, das als abgestufter Hohlzylinder ausgebildet ist und an seinem Endabschnitt 23 eine Stufe 24 aufweist, an der ein erstes Ende der Baueinheit 14 aufgenommen ist, wobei die Baueinheit 14 mittels des Endabschnitts 23 einen Abstand zu dem Gehäuse 21 einhält. Das erste Zwischenelement 22 ist mittels eines Wälzlagers 25 an der Welle 1 gelagert, wobei ein Innenring 26 des Wälzlagers 25 unmittelbar an der Mantelfläche 15 der Welle 1 drehfest befestigt ist und ein Außenring 27 des Wälzlagers 25 drehfest an dem ersten Zwischenelement 22 angebracht ist. Die Verdrehbarkeit der Welle 1 gegenüber dem ersten Zwischenelement 22 wird durch Wälzkörper 28 in dem Wälzlager 25 ermöglicht.

Ein zweites Ende der Baueinheit 14 ist mittels eines weiteren Wälzlagers 29 an der äußeren Mantelfläche 11 der Kettenblattwelle 7 gelagert. Hierzu ist ein zweites Zwischenelement 30 vorgesehen, das das zweite Ende der Baueinheit 14 an einer Stufe abstützt, wobei das zweite Zwischenelement 30 dem ersten Zwischenelement 22 baugleich ist. Beide Zwischenelemente 22, 30 weisen ein Gewinde auf, mit dem die Zwischenelemente 22, 30 in ein an dem Gehäuse 21 angeordnetes Gegengewinde eingeschraubt und damit festgelegt werden können.

Im Betrieb erfasst der erste Sensor 13 im Bereich der ersten Magnetisierung 12 auftretende, das Netto-Drehmoment der Welle 1 bezeichnende Änderungen der ersten Magnetisierung 12. Weiter erfasst der zweite Sensor 36 mit den beiden Teilsensoren 19, 120 im Bereich der ersten Tretkurbel 2 in das Tretlager eingeleitete Drehmomente. Durch Differenzbildung lässt sich aus dem Netto-Drehmoment auf das von der zweiten Tretkurbel 4 eingeleitete Drehmoment schließen.

Die Erfindung wurde vorstehend anhand eines Ausführungsbeispiels näher beschrieben und erläutert, bei dem der Innenring 26 an der äußeren Mantelfläche 15 der Welle 1 angeordnet war. Es versteht sich, dass das Wälzlager 25 keinen Innenring zu umfassen braucht, so dass die Wälzkörper 28 unmittelbar auf der äußeren Mantelfläche 15 der Welle 1 abrollen. Es versteht sich weiter, dass das weitere Wälzlager 29 ebenfalls keinen Innenring aufzuweisen braucht, so dass die Wälzkörper des weiteren Wälzlagers 29 unmittelbar auf der äußeren Mantelfläche 11 der Kettenblattwelle 7 abrollen.

Bei dem vorstehend beschriebenen Ausführungsbeispiel war nicht nur die erste Tretkurbel 2, sondern auch die zweite Tretkurbel 4 unmittelbar, mittels der zweiten Schraubverbindung 5, an der Welle 1 befestigt. Es versteht sich, dass die zweite Tretkurbel 4 nur mittelbar an der Welle 1 befestigt sein kann, beispielsweise derart, dass die zweite Tretkurbel 4 unmittelbar an der Kettenblattwelle 7 befestigt ist, die wiederum an der Welle 1 drehfest angeordnet ist. Dabei ist die Drehrichtung, in der die zweite Tretkurbel 4 betrieben wird, gegenläufig zu der Drehrichtung, mit der das an der Kettenblattwelle 7 angeordnete Gewinde in das an der Welle 1 angeordnete Gegengewinde eingeschraubt ist.

Bei dem vorstehend beschriebenen Ausführungsbeispiel war die Welle 1 als Vollwelle ausgebildet. Es versteht sich, dass die Welle 1 auch als Hohlwelle ausgebildet sein kann, außerhalb derer die Kettenblattwelle 7 angeordnet ist. Der außerhalb der Welle 1 angeordnete Abschnitt der Kettenblattwelle 7 kann dabei als Hohlwelle ausgebildet sein.

### Bezugszeichenliste

| | |
|---|---|
| 1 | Welle |
| 2 | erste Tretkurbel |
| 3 | erste Schraubverbindung |
| 4 | zweite Tretkurbel |
| 5 | zweite Schraubverbindung |
| 6 | Kettenblattträger |
| 7 | Kettenblattwelle |
| 8 | Endabschnitt der Kettenblattwelle 7 |
| 9 | Mittenabschnitt der Welle 1 |
| 10 | Verbreiterung der Welle 1 |
| 11 | äußere Mantelfläche der Kettenblattwelle 7 |
| 12 | erste Magnetisierung |
| 13 | erster Sensor |
| 14 | Baueinheit |
| 15 | äußere Mantelfläche der Welle 1 |
| 16 | zweite Magnetisierung |
| 17 | erster magnetisierter Abschnitt der zweiten Magnetisierung 16 |
| 18 | zweiter magnetisierter Abschnitt der zweiten Magnetisierung 16 |
| 19 | erster Teilsensor des zweiten Sensors |
| 20 | zweiter Teilsensor des zweiten Sensors |
| 21 | Gehäuse |
| 22 | erstes Zwischenelement |
| 23 | Endabschnitt des ersten Zwischenelementes 22 |
| 24 | Stufe |
| 25 | Wälzlager |
| 26 | Innenring |
| 27 | Außenring |
| 28 | Wälzkörper |
| 29 | weiteres Wälzlager |
| 30 | zweites Zwischenelement |
| 31 | Gewinde |
| 32 | erster magnetisierter Abschnitt der ersten Magnetisierung 12 |
| 33 | zweiter magnetisierter Abschnitt der ersten Magnetisierung 12 |
| 34 | erster Teilsensor des ersten Sensors 13 |
| 35 | zweiter Teilsensor des ersten Sensors 13 |
| 36 | zweiter Sensor |

## Patentansprüche

1. Tretlager, umfassend
eine Welle (1),
eine erste Tretkurbel (2), die drehfest mit der Welle (1) verbunden ist,
eine zweite Tretkurbel (4), die drehfest mit der Welle (1) verbunden ist, und
einen Kettenblattträger (6), der mit der Welle (1) verbunden ist, wobei der Kettenblattträger (6) mit einer Kettenblattwelle (7) drehfest verbunden ist,
wobei die Kettenblattwelle (7) mit der Welle (1) drehfest verbunden ist **dadurch gekennzeichnet,**
**dass** die Kettenblattwelle (7) abschnittsweise eine erste Magnetisierung (12) aufweist, und
**dass** ein erster Sensor (13) vorgesehen ist, der eine Änderung der ersten Magnetisierung (12) bei einem im Bereich der ersten Magnetisierung vorliegenden Drehmoment erfasst

2. Tretlager nach Anspruch 1, **dadurch gekennzeichnet, dass** die Verbindung der Kettenblattwelle (7) mit der Welle (1) als Schraubverbindung zwischen einem an der Kettenblattwelle (7) angebrachten Gewinde und einem an der Welle (1) angebrachten Gegengewinde ausgebildet ist.

3. Tretlager nach Anspruch 1 oder 2, **dadurch gekennzeichnet, dass** die Kettenblattwelle (7) als Hohlwelle ausgebildet ist, und dass die Kettenblattwelle (7) abschnittsweise die Welle (1) umgibt.

4. Tretlager nach einem der Ansprüche 1 bis 3, **dadurch gekennzeichnet, dass** die erste Magnetisierung (12) einen ersten magnetisierten Abschnitt (32) und einen axial beabstandeten zweiten magnetisierten Abschnitt (33) umfasst, wobei die beiden magnetisierten Abschnitte (32, 33) zueinander gegenläufig magnetisiert sind.

5. Tretlager nach einem der Ansprüche 1 bis 4, **dadurch gekennzeichnet, dass** die Welle (1) eine zweite Magnetisierung (16) aufweist, und dass ein zweiter Sensor (36) vorgesehen ist, der eine Änderung der zweiten Magnetisierung (16) bei einem im Bereich der zweiten Magnetisierung (16) vorliegenden Drehmoment erfasst.

6. Tretlager nach Anspruch 4 und 5, **dadurch gekennzeichnet, dass** der erste Sensor (13) und der zweite Sensor (36) in einer Baueinheit (14) aufgenommen sind, die die Welle (1) und die Kettenträgerwelle (7) abschnittsweise umgibt.

7. Tretlager nach einem der Ansprüche 1 bis 6, **dadurch gekennzeichnet, dass** ein Mittel zum Erfassen der Drehzahl der Welle (1) vorgesehen ist.

8. Tretlager nach einem der Ansprüche 1 bis 7, **dadurch gekennzeichnet, dass** die Kettenblattwelle (7) an einem Mittenabschnitt (9) der Welle (1) befestigt ist.

9. Tretlager nach Anspruch 8, **dadurch gekennzeichnet, dass** die Kettenblattwelle (7) durch eine im wesentlichen mittig zwischen den Tretkurbeln (2, 4) angeordnete Schraubverbindung mit der Welle (1) verbunden ist.

10. Mit einer Tretkurbel antreibbares Fahrzeug, insbesondere Fahrrad, Kettcar, Ergometer oder Pedelec, umfassend ein Tretlager nach einem der Ansprüche 1 bis 9.

## Claims

1. Bottom bracket comprising
a shaft (1),
a first pedal crank (2) which is connected fixedly in terms of rotation to the shaft (1),
a second pedal crank (4) which is connected fixedly in terms of rotation to the shaft (1), and a chainring carrier (6) which is connected to the shaft (1),
wherein the chainring carrier (6) is connected fixedly in terms of rotation to a chainring shaft (7),
wherein the chainring shaft (7) is connected fixedly in terms of rotation to the shaft (1),
**characterized**
**in that** the chainring shaft (7) comprises a first magnetized area (12) on a portion thereof and
**in that** a first sensor (13) is provided which detects an alteration of the first magnetized area (12) when a torque is present in the region of the first magnetized area.

2. Bottom bracket according to Claim 1, **characterized in that** the connection of the chainring shaft (7) to the shaft (1) is configured as a screw connection between a thread attached to the chainring shaft (7) and a mating thread attached to the shaft (1).

3. Bottom bracket according to Claim 1 or 2, **characterized in that** the chainring shaft (7) is configured as a hollow shaft and **in that** the chainring shaft (7) partially surrounds the shaft (1).

4. Bottom bracket according to one of Claims 1 to 3, **characterized in that** the first magnetized area (12) comprises a first magnetized portion (32) and an axially spaced-apart, second magnetized portion (33), the two magnetized portions (32, 33) being magnetized in opposing directions relative to one another.

5. Bottom bracket according to one of Claims 1 to 4, **characterized in that** the shaft (1) comprises a second magnetized area (16) and **in that** a second sensor (36) is provided which detects an alteration of the second magnetized area (16) when a torque is present in the region of the second magnetized area (16).

6. Bottom bracket according to Claim 4 and 5, **characterized in that** the first sensor (13) and the second sensor (36) are received in a subassembly (14) which partially surrounds the shaft (1) and the chain carrier shaft (7).

7. Bottom bracket according to one of Claims 1 to 6, **characterized in that** a means is provided for detecting the rotational speed of the shaft (1).

8. Bottom bracket according to one of Claims 1 to 7, **characterized in that** the chainring shaft (7) is fastened to a central portion (9) of the shaft (1).

9. Bottom bracket according to Claim 8, **characterized in that** the chainring shaft (7) is connected to the shaft (1) by a screw connection arranged substantially centrally between the pedal cranks (2, 4).

10. Vehicle which may be driven by a pedal crank, in particular a bicycle, pedal-powered car, exercise machine or electric bicycle, comprising a bottom bracket according to one of Claims 1 to 9.

## Revendications

1. Pédalier, comprenant
un arbre (1),
une première manivelle de pédalier (2) qui est connectée de manière solidaire en rotation à l'arbre (1),
une deuxième manivelle de pédalier (4) qui est connectée de manière solidaire en rotation à l'arbre (1), et
un porte-plateau (6) qui est connecté à l'arbre (1), le porte-plateau (6) étant connecté de manière solidaire en rotation à un arbre de plateau (7),
l'arbre de plateau (7) étant connecté de manière solidaire en rotation à l'arbre (1),
**caractérisé en ce que**
l'arbre de plateau (7) présente en partie une aimantation (12), et
**en ce qu'**un premier capteur (13) est prévu, lequel détecte une variation de la première aimantation (12) dans le cas d'un couple s'appliquant dans la région de la première aimantation.

2. Pédalier selon la revendication 1, **caractérisé en ce que** la connexion de l'arbre de plateau (7) à l'arbre (1) est réalisée sous forme de connexion vissée entre un filetage réalisé sur l'arbre de plateau (7) et un contre-filetage réalisé sur l'arbre (1).

3. Pédalier selon la revendication 1 ou 2, **caractérisé en ce que** l'arbre de plateau (7) est réalisé sous forme d'arbre creux, et **en ce que** l'arbre de plateau (7) entoure en partie l'arbre (1).

4. Pédalier selon l'une quelconque des revendications 1 à 3, **caractérisé en ce que** la première aimantation (12) comprend une première portion aimantée (32) et une deuxième portion aimantée (33) espacée axialement, les deux portions aimantées (32, 33) étant aimantées à l'opposé l'une de l'autre.

5. Pédalier selon l'une quelconque des revendications 1 à 4, **caractérisé en ce que** l'arbre (1) présente une deuxième aimantation (16) et **en ce qu'**un deuxième capteur (36) est prévu, lequel détecte une variation de la deuxième aimantation (16) dans le cas d'un couple s'appliquant dans la région de la deuxième aimantation (16).

6. Pédalier selon les revendications 4 et 5, **caractérisé en ce que** le premier capteur (13) et le deuxième capteur (36) sont reçus dans une unité constructive (14) qui entoure en partie l'arbre (1) et l'arbre de plateau (7).

7. Pédalier selon l'une quelconque des revendications 1 à 6, **caractérisé en ce qu'**un moyen pour détecter la vitesse de rotation de l'arbre (1) est prévu.

8. Pédalier selon l'une quelconque des revendications 1 à 7, **caractérisé en ce que** l'arbre de plateau (7) est fixé à une portion centrale (9) de l'arbre (1).

9. Pédalier selon la revendication 8, **caractérisé en ce que** l'arbre de plateau (7) est connecté à l'arbre (1) par une connexion vissée disposée essentiellement centralement entre les manivelles de pédalier (2, 4).

10. Véhicule pouvant être entraîné par une manivelle de pédalier, en particulier bicyclette, un kart à pédales, ergomètre ou Pédelec, comprenant un pédalier selon l'une quelconque des revendications 1 à 9.
